# EUROPEAN PATENT APPLICATION

(11) **EP 2 161 908 A1**
(43) Date of publication of application: **10.03.2010**
(21) Application number: 08252950.4
(22) Date of filing: 04.09.2008
(51) Int. Cl.: H04M 1/21, A61J 1/03

(54) **Mobile communication device with a pillbox and method**

(71) Applicant: LUCENT TECHNOLOGIES INC., Murray Hill NJ 07974-0636 (US)
(72) Inventor: Teunissen, Harold Wilhelm Antonie, Deventer, 7411 JE (NL)
(74) Representative: Leppard, Andrew John

(57) **Abstract**

A mobile communications device is disclosed. The mobile communications device is operable to provide wireless communications for a user and comprises: a medicament receptacle operable to receive a medicament to be dispensed to said user. The medicament which may then be accessible to the user when required such as, for example, during an emergency.

## Description

### FIELD OF THE INVENTION

The present invention relates to a mobile communications device and a method.

### BACKGROUND TO THE INVENTION

Mobile communications devices are known. Such mobile communications devices provide a variety of useful communications functions to users.

It is desired to improve the utility of such mobile communications devices.

### SUMMARY OF THE INVENTION

According to a first aspect of the present invention there is provided a mobile communications device operable to provide wireless communications for a user, said mobile communications device comprising: a medicament receptacle operable to receive a medicament to be dispensed to said user.

The first aspect recognises that chronic patients regularly need to take their medicaments in order to fight disease or suppress symptoms. Some patients need to have particular medicaments constantly available to hand to enable the medicament to be administered in emergency situations to help improve the patient's likelihood of survival. Although various pillboxes are available for storing such medicaments, these may be inadvertently left elsewhere such as, for example, at home, in an office or in a car. The first aspect recognises that mobile communication devices are for many people such a routine item that these are often kept available to hand, almost without thought.

Accordingly, a mobile communication device is provided with a medicament receptacle. The receptacle receives the medicament which may then be accessible to the user when required such as, for example, during an emergency. Because the mobile communications device is often routinely carried by many people, there is a high likelihood is that the required medicament will be available and to hand should such an emergency situation occur, rather than the medicament having been left elsewhere.

In one embodiment, said medicament receptacle is defined by a recess within said mobile communications device shaped to receive said medicament. Accordingly, a recess in the mobile communications device is provided into which the medicament may be placed for subsequent use. This enables the medicament to be retained within the mobile communications device without necessarily increasing its size.

In one embodiment, the mobile communications device comprises a cover operable to enclose said medicament within said recess. Accordingly, the medicament is covered retain it in place and to protect it within the recess.

In one embodiment, said cover comprises a cover of said mobile communications device. Hence, the same cover which is used to retain other components of the mobile communications device, such as for example, a subscriber identify module (SIM) card or a battery may also be used to cover the recess.

In one embodiment, said cover is retained on said mobile communications device and is movable between a first position in which said recess is accessible to enable removal of said medicament and a second position is which said recess is inaccessible to prevent removal of said medicament. Accordingly, the cover may be retained on the mobile communications device and be moveable between two positions in order to make access to and retention of the medicament easy to perform.

In one embodiment, said cover is slidably movable between said first and second position.

In one embodiment, said cover is hingably movable between said first and second position.

In one embodiment, the mobile communications device comprises an inner cover operable to retain said medicament within said recess. Accordingly, an inner cover may be provided to conceal the recess and further protect any retained medicament during access to other components of the mobile communications device.

In one embodiment, the inner cover is operable to seal said medicament within said recess. Accordingly, the inner cover may provide a seal in order to seal the medicament within the recess. Sealing the medicament within the recess helps prevent any damage to the medicament should, for example, the mobile device be exposed to unfavourable conditions such as, for example, being submerged in water.

In one embodiment, the mobile communications comprises a medicament container shaped to be retained by said recess and operable to receive said medicament.

Accordingly, a medicament container may be provided into which the medicament may be placed. The medicament container may then be placed into the recess.

In one embodiment, the mobile communications device comprises programmable logic operable at a predetermined time to alert said user to administer said medicament. Accordingly, the mobile communications device may be preprogrammed to alert the user to take a medicament at a predetermined time. In this way, the mobile communications device alerts the user to take the medicament at regular intervals, thereby improving the effectiveness of any treatment.

In one embodiment, said programmable logic is operable to provide an indication on said display screen of the presence of said medicament. Accordingly, anyone attempting to assist the user in a moment of distress, and who may attempt to use the mobile communications device to contact a friend or relative of the user, will be alerted to the existence of the medicament which may be required by the user during the period of distress. The person assisting the user in distress may then try to administer the medicament to the user, thereby helping to ameliorate any distress.

In one embodiment, said programmable logic is operable to provide an indication on said display screen of a medical condition of said user. Accordingly, any medical practitioner dealing with a user in distress may be provided with appropriate medical condition or medical history information to enable an appropriate diagnosis and intervention to take place.

According to a second aspect of the present invention there is provided a method, comprising the step of: receiving a medicament to be dispensed to a user in a medicament receptacle of a mobile communications device operable to provide wireless communications to said user.

In one embodiment, said medicament receptacle is defined by a recess within said mobile communications device shaped to receive said medicament.

In one embodiment, the method comprises enclosing said medicament within said recess with a cover.

In one embodiment, said cover comprises a cover of said mobile communications device.

In one embodiment, the method comprises the steps of retaining said cover on said mobile communications device and moving the cover between a first position in which said recess is accessible to enable removal of said medicament and a second position is which said recess is inaccessible to prevent removal of said medicament.

In one embodiment, said method comprises the step of slidably moving the cover between said first and second position.

In one embodiment, said method comprises the step of hingably moving the cover between said first and second position.

In one embodiment, the method comprises the step of retaining said medicament within said recess with an inner cover.

In one embodiment, the method comprises the step of sealing said medicament within said recess with the inner cover.

In one embodiment, the method comprises the step of receiving said medicament within a medicament container shaped to be retained by said recess.

In one embodiment, the method comprises the step of programming programmable logic to alert said user to administer said medicament at a predetermined time.

In one embodiment, the method comprises the step of programming programmable logic to provide an indication on said display screen of the presence of said medicament.

In one embodiment, the method comprises the step of programming programmable logic to provide an indication on said display screen of a medical condition of said user.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will now be described further, with reference to the accompanying drawings in which:
Figures 1A and 1B are schematic diagrams showing a mobile communications device according to one embodiment;
Figures 2A and 2B are schematic diagrams of a mobile communications device according to another embodiment;
Figure 3 shows an example display of a mobile communications device according to one embodiment;
Figure 4 is another example of a mobile communications device screen display according to one embodiment; and
Figure 5 is another example of a mobile communications device screen display according to one embodiment.

### DESCRIPTION OF THE EMBODIMENTS

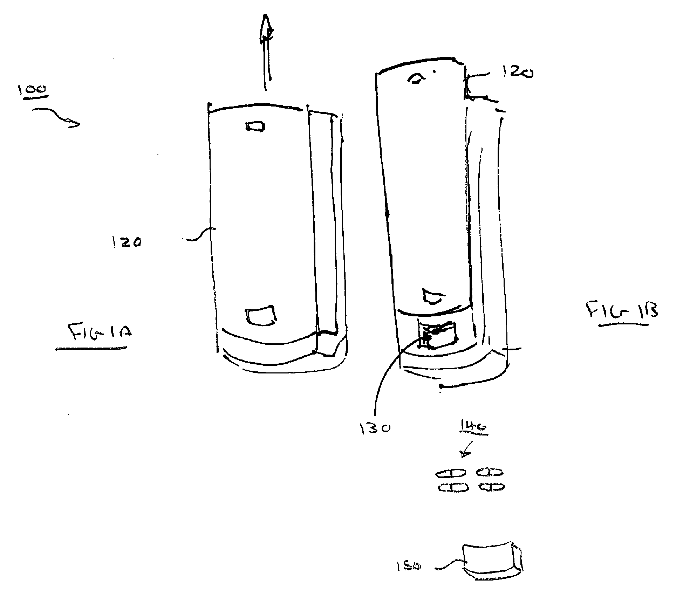

Figures 1A and 1B show a mobile communications device, generally 100, according to one embodiment. In this embodiment, the back cover 120 of the mobile communications device 100 is slidably attached. The cover 120 is operable to move between a closed position (shown in Figure 1A) and an open position (shown in Figure 1B).

In the open position, the back cover 120 reveals a recess 130 in the mobile communications device 100 within which a medicament, generally 140, may be stored. The medicament 140 may be stored directly within the recess 130 or may be placed within a receptacle 150 prior to being placed within the recess 130. The receptacle 150 provides a sealed environment within which the medicament 140 is stored. Alternatively, or additionally, the back cover 120 may be provided with a seal in order to provide a sealed environment within the recess 130. Such a sealed environment provides protection from the ingress of water or contaminants. The receptacle 150 is shaped to fit within the recess 130.

Once the medicament 140 is stored with the recess 130, the back cover 120 slides to a closed position, thereby preventing the receptacle 150 or the medicament 140 from escaping. To access the medicament 140 the reverse operation is performed.

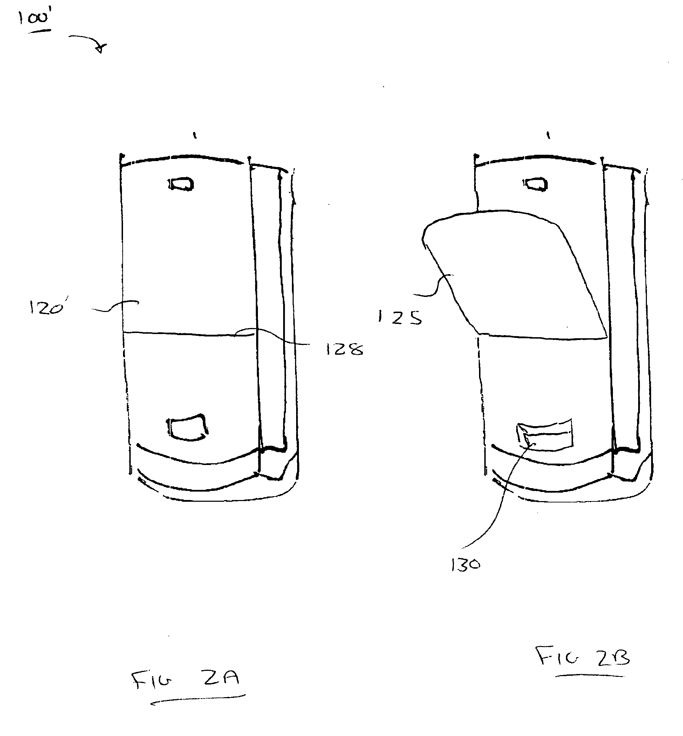

Figures 2A and 2B illustrate a mobile communications device, generally 100', accordingly to another embodiment. A rear cover 120' is provided with a hinge portion 128. The hinge portion 128 enables a part 125 of the rear cover 120' to be moved between an open position (as shown in Figure 2B) and a closed position (as shown in Figure 2A). When in the open position, the recess 130 is accessible to enable a medicament 140 or a receptacle 150 containing the medicament 140 to be retained therein.

The receptacle 150 provides a sealed environment within which the medicament 140 is stored. Alternatively, or additionally, the part 125 of the back cover 120 may be provided with a seal in order to provide a sealed environment within the recess 130. Such a sealed environment provides protection from the ingress of water or contaminants.

Once the medicament 140 is stored with the recess 130, the part 125 of the back cover 120 pivots to a closed position, thereby preventing the receptacle 150 or the medicament 140 from escaping. To access the medicament 140 the reverse operation is performed.

Accordingly, it can be seen that a medicament may be readily retained within the body of the mobile communications device, without needing to increase the overall size of that device. The medicament can then easily be accessed when required. The recess 130 need not necessarily be accessible via a back cover. It will be appreciated that the recess 130 may be located in any accessible location suited to the particular design of a mobile communications device.

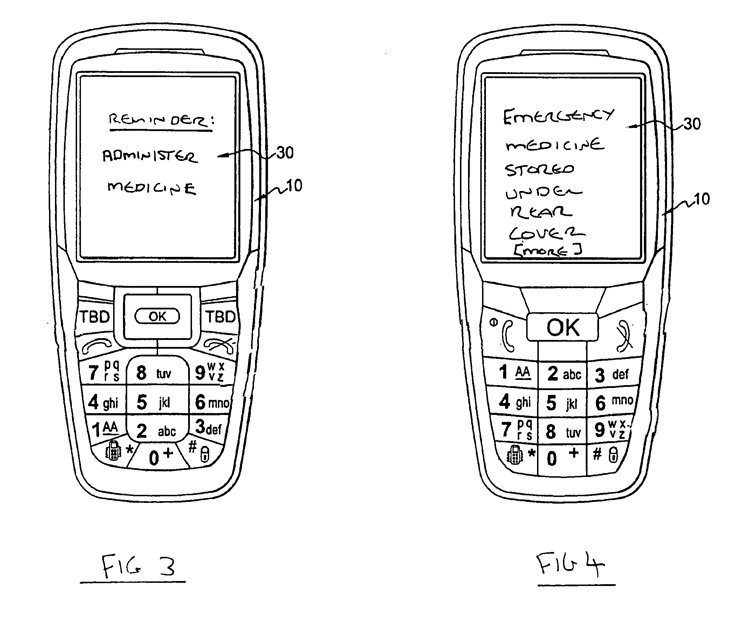

Figure 3 illustrates an example display of a mobile communications device 10 according to one embodiment. Logic (not shown) within the mobile communications device 10 may be programmed by the user to provide predetermined reminders of the need to administer a medicament stored within the mobile communications device 10. These reminders may be set by the user to occur at predetermined times or to occur following the expiration of predetermined time periods, in accordance with the particular administration regime of the medicament.

When the predetermined time occurs, or the predetermined time period expires, a visual alert is displayed on the screen 30 of the mobile communications device 10, reminding the user to take the medicament. The visual alert may be supplemented by an audio alert and/or by a vibration of the mobile communications device 10 to gain the attention of the user. Hence, it can be seen that the mobile communications device 10 enables the medicament to be easily stored for subsequent administration and provides a reminder to the user to take the medicament, thereby improving its efficacy.

Figure 4 illustrates another example display of the mobile communications device 10. Logic (not shown) within the mobile communications device 10 may be programmed by the user to provide a screen saver to be shown on the display 30. The screen saver indicates that emergency medicine is stored under the rear cover of the mobile communications device 10.

In the event that the user has a medical emergency and assistance is given to the user, then should the mobile communications device 10 be examined a clear indication is given on the display 30 that emergency medicine is stored within the mobile communications device 10. Further information may then be provided, should it be selected by the person providing assistance, which will typically provide information regarding how to access or administer the medicine and any other helpful information that may be required.

Of course the logic may be programmed to display the message as part of the main visible display of the mobile communications device 10, rather than as a screen saver. Alternatively, an indication may be provided as part of the main visible display of the mobile communications device 10 that emergency information is available for selection.

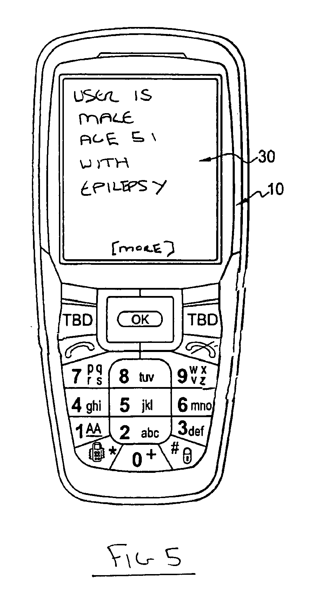

Figure 5 illustrates another example display of the mobile communications device 10. Logic (not shown) within the mobile communications device 10 may be programmed by the user to provide detailed medical information relating to the user of the mobile communications device 10. In the example shown in Figure 5, the display 30 indicates that the user is male and aged 51. This helps identify the correct user of the mobile communications device 10 and reduces the risk of incorrectly identifying the user. This information may be supplemented with further information relating to the user of the device, or even a picture.

The screen 30 also displays the medical condition of the user, in this example indicating that the owner has epilepsy. The mobile communications device 10 may be programmed with further information to assist a medical practitioner when treating the user of the mobile communications device 10 in an emergency situation.

Accordingly, it can be seen that because mobile communications devices are often routinely carried by many people, there is a high likelihood is that the required medicament will be available and to hand should such an emergency situation occur, rather than the medicament having been left elsewhere. The mobile communications device alerts the user to take the medicament at regular intervals, thereby improving the effectiveness of any treatment. Anyone attempting to assist the user in a moment of distress, and who may attempt to use the mobile communications device, will be alerted to the existence of the medicament which may be required by the user during the period of distress. The person assisting the user in distress may then try to administer the medicament to the user, thereby helping to ameliorate any distress. Furthermore, any medical practitioner dealing with a user in distress may be provided with appropriate medical condition or medical history information to enable an appropriate diagnosis and intervention to take place.

Although illustrative embodiments of the invention have been disclosed in detail herein, with reference to the accompanying drawings, it is understood that the invention is not limited to the precise embodiment shown and that various changes and modifications can be effected therein by one skilled in the art without departing from the scope of the invention as defined by the appended claims and their equivalents.

## Claims

1. A mobile communications device operable to provide wireless communications for a user, said mobile communications device comprising:
a medicament receptacle operable to receive a medicament to be dispensed to said user.

2. The mobile communications device of claim 1, wherein said medicament receptacle is defined by a recess within said mobile communications device shaped to receive said medicament.

3. The mobile communications device of claim 2, comprising a cover operable to enclose said medicament within said recess.

4. The mobile communications device of claim 3, wherein said cover comprises a cover of said mobile communications device.

5. The mobile communications device of claim 3, wherein said cover is retained on said mobile communications device and is movable between a first position in which said recess is accessible to enable removal of said medicament and a second position is which said recess is inaccessible to prevent removal of said medicament.

6. The mobile communications device of claim 3, wherein said cover is slidably movable between said first and second position.

7. The mobile communications device of claim 3, wherein said cover is hingably movable between said first and second position.

8. The mobile communications device of claim 1, comprising an inner cover operable to retain said medicament within said recess.

9. The mobile communications device of claim 8, wherein said inner cover is operable to seal said medicament within said recess.

10. The mobile communications device of claim 1, comprising a medicament container shaped to be retained by said recess and operable to receive said medicament.

11. The mobile communications device of claim 1, comprising programmable logic operable at a predetermined time to alert said user to administer said medicament.

12. The mobile communications device of claim 10, wherein said programmable logic is operable to provide an indication on said display screen of the presence of said medicament.

13. The mobile communications device of claim 10, wherein said programmable logic is operable to provide an indication on said display screen of a medical condition of said user.

14. A method, comprising the step of:
receiving a medicament to be dispensed to a user in a medicament receptacle of a mobile communications device operable to provide wireless communications to said user.

## Amended claims

### Amended claims in accordance with Rule 137(2) EPC.

**1.** A mobile communications device (100; 100') operable to provide wireless communications for a user, said mobile communications device comprising:
a medicament receptacle (130) operable to receive a medicament (140) to be dispensed to said user; and programmable logic operable to provide an indication on a display screen (30) of the presence of said medicament.

**2.** The mobile communications device of claim 1, wherein said medicament receptacle is defined by a recess within said mobile communications device shaped to receive said medicament.

**3.** The mobile communications device of claim 2, comprising a cover operable to enclose said medicament within said recess.

**4.** The mobile communications device of claim 3, wherein said cover comprises a cover of said mobile communications device.

**5.** The mobile communications device of claim 3, wherein said cover is retained on said mobile communications device and is movable between a first position in which said recess is accessible to enable removal of said medicament and a second position is which said recess is inaccessible to prevent removal of said medicament.

**6.** The mobile communications device of claim 3, wherein said cover is slidably movable between said first and second position.

**7.** The mobile communications device of claim 3, wherein said cover is hingably movable between said first and second position.

**8.** The mobile communications device of claim 1, comprising an inner cover operable to retain said medicament within said recess.

**9.** The mobile communications device of claim 8, wherein said inner cover is operable to seal said medicament within said recess.

**10.** The mobile communications device of claim 1, comprising a medicament container shaped to be retained by said recess and operable to receive said medicament.

**11.** The mobile communications device of claim 1, wherein said programmable logic is operable at a predetermined time to alert said user to administer said medicament.

**12.** The mobile communications device of claim 1, wherein said programmable logic is operable to provide an indication on said display screen of a medical condition of said user.

**13.** A method, comprising the step of:
receiving a medicament (140) to be dispensed to a user in a medicament receptacle (130) of a mobile communications device (100; 100') operable to provide wireless communications to said user; and
programming programmable look to provide an indication on a display screen (30) of the presence of said medicament.
